# EUROPÄISCHE PATENTANMELDUNG

(11) **EP 4 389 255 A1**
(43) Veröffentlichungstag der Anmeldung: **26.06.2024**
(21) Anmeldenummer: 23183083.7
(22) Anmeldetag: 03.07.2023
(51) Int. Cl.: B01D 39/16

(54) **LUFTFILTERMEDIUM, FILTERMEDIUMKÖRPER UND FILTERELEMENT**

(30) Priorität: 19.12.2022 DE 102022133938
(71) Anmelder: MANN+HUMMEL GmbH, 71636 Ludwigsburg (DE)
(72) Erfinder: HITZKE, Christoph, 71636 Ludwigsburg (DE); WATZLAWZYK, Doris, 71636 Ludwigsburg (DE); FREMEREY, Peter, 71636 Ludwigsburg (DE)
(74) Vertreter: Mann + Hummel Intellectual Property

(57) **Zusammenfassung**

Die Erfindung betrifft ein Luftfiltermedium (1), insbesondere für einen Innenraumluftfilter, einen Ansaugluftfilter einer Brennstoffzelle oder einen Wrasenfilter, umfassend eine Ionentauscherlage (2), die Ionentauscherpartikel umfasst, und eine Imprägnierlage (3), die imprägnierte Aktivkohlepartikel umfasst. Die imprägnierten Aktivkohlepartikel der Imprägnierlage (3) sind mit einem sauren Imprägniermittel umfassend zumindest eine anorganische Säure imprägniert, wobei die anorganische Säure aus der Gruppe umfassend Phosphorsäure, Schwefelsäure und Salzsäure ausgewählt ist. Eine Grammatur der Ionentauscherpartikel in der Ionentauscherlage (2) liegt in einem Bereich zwischen 150 g/m² und 350 g/m². Eine Grammatur der imprägnierten Aktivkohlepartikel in der Imprägnierlage (3) liegt in einem Bereich zwischen 150 g/m² und 350 g/m². Ferner werden ein Filtermediumkörper (10) sowie ein Filterelement (100) offenbart.

## Beschreibung

### Technisches Gebiet

Die Erfindung betrifft ein Luftfiltermedium, insbesondere für einen Innenraumluftfilter, einen Ansaugluftfilter einer Brennstoffzelle oder einen Wrasenfilter, einen Filtermediumkörper mit einem solchen Luftfiltermedium und ein Filterelement.

### Stand der Technik

Luftfiltermedien sind grundsätzlich bekannt und dienen als Kernkomponente von Filterelementen dazu, Luftströme für nachgelagerte Verwendungen aufzureinigen. Es kommen hier beispielsweise Innenraumluftfilter für Fahrgastinnenräume von Kraftfahrzeugen, Ansaugluftfilter von Brennstoffzellen sowie Wrasen- bzw. Dunstabzugsfilter in Küchen in Betracht. Derartige Filterelemente sollen nicht nur partikuläre Verunreinigungen, beispielsweise Pollen oder Feinstaub, entfernen, sondern auch Gerüche, insbesondere durch gasförmige Geruchsstoffe, oder gesundheitsschädliche oder reaktive gasförmige Stoffe. Insbesondere die Entfernung von Gas- und Geruchsstoffen ist hierbei eine Herausforderung, da die unterschiedlichen Gas- und Geruchsstoffe durch ihre unterschiedlichen spezifischen, insbesondere chemischen, Eigenschaften nur durch maßgeschneiderte Adsorbenzien effizient aus einem Luftstrom entfernbar sind.

Aus DE 10 2013 011 511 A1 ist eine Filtereinrichtung, insbesondere für die einer Brennstoffzelle zuzuführende Luft bekannt, aufweisend ein Trägermedium und Aktivkohle als Adsorptionsmittel, wobei die Aktivkohle durch Zusatz von Klebstoff immobilisiert ist.

Aus DE 10 2005 016 677 A1 ist ein Filterelement mit einem mehrlagigen Filtermaterial bekannt, bei dem eine anströmseitig angeordnete Aktivschicht mit Aktivkohlefasern vorgesehen ist, an die sich abströmseitig eine Adsorberlage mit körnigen Adsorbentien anschließt. An diese Adsorberlage kann sich abströmseitig eine weitere Aktivschicht mit Aktivkohlefasern anschließen. Die hierbei verwendeten Adsorbentien können Aktivkohle, Zeolithe, Cyclodextrine, Silikate, Ionentauscher und Alumosilikate umfassen.

Aus DE 10 2012 007 503 A1 ist ein weiteres adsorptives Filtermedium bekannt, bei dem mehrere erste Filterlagen mit einem ersten Adsorptionsstoff und mehrere von den ersten Filterlagen verschiedene zweite Filterlagen mit einem zweiten Adsorptionsstoff vorgesehen sind, die einander abwechseln und unterschiedliche Durchströmungswiderstände bzw. Druckverluste aufweisen.

Aus DE 10 2009 021 020 A1 ist ein weiteres adsorptives Filtermaterial bekannt, welches ein Austauscherharz enthält, das mit Metallkationen beladen ist.

Für die Abscheidung basischer Gase wie etwa Ammoniak (NH₃) und Trimethylamin (TMA) haben sich saure Kationenaustauscherharze etabliert. Ionentauscher weisen hierbei gegenüber imprägnierten Aktivkohlen eine um ein Vielfaches höhere Adsorptionskapazität auf, haben jedoch den Nachteil einer schlechteren Spontanität. Mit anderen Worten kann ein Ionentauscher über einen langen Zeitraum Schadgase aus einem Luftstrom entfernen, weist jedoch ein nachteiliges Startverhalten auf, das zu unerwünschten Schadgasdurchbrüchen führen kann. Ferner sind derartige lonentauscherharze vergleichsweise teuer, da deren massebezogener Preis in etwa dem dreifachen einer imprägnierten Aktivkohle entspricht.

Der Erfindung liegt daher die Aufgabe zugrunde, ein Luftfiltermedium zu schaffen, das eine optimierte Adsorptionskinetik von basischen Gasen wie NH₃ und TMA, insbesondere eine verbesserte Anfangsabscheideeffizienz, aufweist, und dabei kostengünstiger bereitgestellt werden kann als bekannte Luftfiltermedien zur Gasadsorption.

### Offenbarung der Erfindung

Diese Aufgabe wird gelöst durch ein Luftfiltermedium mit den Merkmalen des Anspruchs 1, einen Filtermedienkörper mit den Merkmalen des Anspruchs 13, ein Filterelement nach Anspruch 14 und eine Verwendung nach Anspruch 15.

Die Unteransprüche geben jeweils vorteilhafte und zweckmäßige Weiterbildungen an.

Das erfindungsgemäße Luftfiltermedium eignet sich insbesondere für Innenraumluftfilter von Kraftfahrzeugen, Ansaugluftfilter von Brennstoffzellen oder Wrasen- bzw. Dunstabzugsfilter. Es sind aber auch Anwendungen im Bereich der Gebäudeluftfiltration bzw. raumlufttechnischen Anlagen möglich. Spezifisch ist das erfindungsgemäße Luftfiltermedium insbesondere zur Abscheidung von NH₃, TMA und Methylethylketon (MEK) ausgebildet. Zusätzlich scheidet das erfindungsgemäße Luftfiltermedium auch weitere Kohlenwasserstoffe wie z.B. n-Butan und Toluol ab.

Das erfindungsgemäße Luftfiltermedium umfasst eine Ionentauscherlage, die Ionentauscherpartikel umfasst, und eine Imprägnierlage, die imprägnierte Aktivkohlepartikel umfasst. Die imprägnierten Aktivkohlepartikel der Imprägnierlage sind mit einem sauren Imprägniermittel umfassend zumindest eine anorganische Säure imprägniert, wobei die anorganische Säure aus der Gruppe umfassend Phosphorsäure, Schwefelsäure und Salzsäure ausgewählt ist. Eine Grammatur der lonentauscherpartikel in der Ionentauscherlage liegt in einem Bereich zwischen 150 g/m² und 350 g/m². Ferner liegt eine Grammatur der imprägnierten Aktivkohlepartikel in der Imprägnierlage in einem Bereich zwischen 150 g/m² und 350 g/m². Neben den genannten anorganischen Säuren können auch organische Säuren wie etwa Zitronensäure als Bestandteil des sauren Imprägniermittels eingesetzt werden.

In Ausführungen kann die Grammatur der lonentauscherpartikel in der Ionentauscherlage maximal 300 g/m², insbesondere maximal 260 g/m², betragen und/oder die Grammatur der imprägnierten Aktivkohlepartikel in der Imprägnierlage maximal 330 g/m², insbesondere maximal 290 g/m², betragen.

Die untere Grenze der Grammaturen der lonentauscherpartikel in der Ionentauscherlage und der imprägnierten Aktivkohlepartikel in der Imprägnierlage ist technisch erforderlich, um in der Praxis eine ausreichende Packungsdichte zu erreichen und dadurch die Bildung von nicht von Partikeln überdeckten Bypasskanälen in den Lagen zu vermeiden.

In aus dem Stand der Technik bekannten Luftfiltermedien kommen Ionentauscher üblicherweise mit Grammaturen von über 350 g/m², bei einer typischen Korngröße der Ionentauscherpartikel im Bereich 300-1200 µm, zum Einsatz. Dies ist im Stand der Technik nötig, um eine geforderte Anfangsabscheideeffizienz von >95 %, beispielsweise für NH₃, zu erreichen, genauer bei einer Gaskonzentration von 10 ppm NH₃ und einer typischen Medienanströmgeschwindigkeit von 0,2 m/s.

Demgegenüber erreicht das erfindungsgemäße Luftfiltermedium eine Anfangsabscheideeffizienz von >95 % für NH₃ und TMA anhand einer deutlich geringeren Grammatur der lonentauscherpartikel in der Ionentauscherlage, da es die Ionentauscherlage mit einer Imprägnierlage umfassend sauer imprägnierte Aktivkohlepartikel kombiniert. Die imprägnierte Aktivkohle weist eine, verglichen mit dem Ionentauscher, bessere Spontanität auf und trägt daher zu einer hohen Anfangsabscheideeffizienz bei und verbessert so das "Startverhalten" und verhindert anfängliche Gasdurchbrüche. Der Ionentauscher hingegen weist eine deutlich höhere Adsorptionskapazität auf und trägt damit zur Aufrechterhaltung der Gasadsorption über längere Zeiträume bei.

Hierdurch weist das erfindungsgemäße Luftfiltermedium eine verbesserte Adsorptionskinetik für basische Gase, insbesondere NH₃ und TMA, auf und kann aufgrund der deutlich geringeren Grammatur des vergleichsweise teuren lonentauschermaterials gleichzeitig deutlich kostengünstiger hergestellt werden.

Die imprägnierten Aktivkohlepartikel können in Ausführungsformen mit 5 Massen-% oder weniger des sauren Imprägniermittels imprägniert sein. Dieser geringe Imprägnieranteil ermöglicht weiterhin die Koadsorption von Kohlenwasserstoffen, insbesondere von Methylethylketon (MEK), während das lonentauscherharz sehr gasspezifisch ist und nur basische Gase abscheidet.

Unter einer imprägnierten Aktivkohle wird eine Aktivkohle verstanden, die eine auf die Aktivkohle aufgebrachte Imprägnierung aufweist. Die zu entfernenden Gas- und/oder Geruchsstoffe werden chemisch von der auf die Aktivkohle aufgebrachten Imprägnierung gebunden oder durch diese in eine von einer in Durchströmungsrichtung darauffolgenden Lage adsorbierbare Form umgewandelt. Mit anderen Worten wirken die auf die Aktivkohle aufgebrachten Imprägnierungen mit dem jeweiligen Gas- oder Geruchsstoff chemisorptiv. Die Imprägnierlage hat somit zusätzliche Chemisorptions-Eigenschaften, die die Adsorption verstärken oder auf ein vorbestimmtes Verbindungsprofil anpassen.

Geeignete Aktivkohlesorten sind beispielsweise auf verschiedenen Rohstoffen basierende Aktivkohlesorten aufweisend verschiedene Aktivierungsgrade. Hierdurch ist eine zusätzliche vorteilhafte Anpassung an das Zielgasspektrum möglich. Bevorzugte Rohstoffe sind hierbei Kokosnuss, Steinkohle und Holzkohle, wobei Kokosnuss-Aktivkohle bevorzugt ist.

Gemäß einer weiteren Ausführungsform kann eine Grammatur der lonentauscherpartikel in der Ionentauscherlage in einem Bereich zwischen 200 g/m² und 350 g/m² liegen und/oder eine Grammatur der imprägnierten Aktivkohlepartikel in der Imprägnierlage in einem Bereich zwischen 250 g/m² und 350 g/m² liegen.

Dabei beschreibt die untere Grenze der Grammatur von 200 g/m² für die Ionentauscherpartikel die Mindestauflage, welche für eine effektive Gasabscheidung mit noch geringem Bypassverhalten notwendig ist. Der untere Grammaturbereich von 250 g/m² für die imprägnierten Aktivkohlepartikel ist die Mindestauflage, welche für eine nahezu vollständige Gasabscheidung der sich noch abströmseitig der Ionentauscherlage befindlichen Gaskonzentration notwendig ist. Der obere Grammaturbereich von 350 g/m² beschreibt jeweils das Adsorberflächengewicht, welches maximal pro Adsorberlage aufgebracht werden kann, ohne Einschränkungen hinsichtlich der mechanischen Belastbarkeit des Filtermediums zu riskieren.

Das Luftfiltermedium weist eine vorbestimmte Anströmseite und eine vorbestimmte Abströmseite auf. Hierbei ist das Luftfiltermedium von der Anströmseite zur Abströmseite in einer Durchströmungsrichtung durchströmbar und die Imprägnierlage stromabwärts der Ionentauscherlage angeordnet. Durch die beschriebene Anordnung kann der Ionentauscher, mit einer typischen Gasaufnahmekapazität von >50 mg/g für Konzentrationen um 10 ppm NH₃, die Hauptlast des adressierten Zielgases aufnehmen.

Unter beispielhaften Prüfbedingungen, unter denen ein mit 10 ppm NH₃ versetzter Luftvolumenstrom mit 400 Nm³/h (Anströmgeschwindigkeit am Filtermedium 0,23 m/s) durch einen das Luftfiltermedium aufweisenden Filtermediumkörper geleitet und dem Filtermediumkörper nachgelagert vermittels eines FTIR die NH₃ Konzentration gemessen wird, sind das in den ersten 10 Minuten der Messung etwa 80 % der aufgegeben Rohgasmenge. Die Imprägnierlage mit einer weit geringeren Gasaufnahmekapazität von ca. 5 mg/g, kann somit eine um ein Vielfaches höhere Messdauer das Schadgas aufnehmen und über einen längeren Zeitraum die nötige Spontanität bereitstellen als im Vergleich zur anströmseitigen Anordnung.

Das Luftfiltermedium weist ferner eine Aktivlage auf, die nicht-imprägnierte Aktivkohlepartikel umfasst und insbesondere stromabwärts der Imprägnierlage angeordnet ist. Insbesondere kann die Imprägnierlage hierbei zwischen der Aktivlage und der Ionentauscherlage angeordnet sein. In der beschriebenen Anordnung kann die Imprägnierlage als Vorfilter zur Kohlenwasserstoffadsorption genutzt werden. Durch den in Ausführungen verhältnismäßig geringen Imprägnierungsgrad von ca. 5 m.%, hat die Imprägnierlage noch ca. 80 % ihrer Adsorptionskapazität für Kohlenwasserstoffe, wie z.B. MEK, im Vergleich zur Aktivlage ohne Imprägnierung. Somit kann die Imprägnierlage stromaufwärts der Aktivlage bereits einen Teil der Kohlenwasserstoffe aufnehmen und die Standzeit der Aktivlage verlängern.

In anderen Ausführungen kann die Aktivlage jedoch auch stromaufwärts der Imprägnierlage angeordnet sein. Insbesondere kann die Aktivlage auch zwischen der Imprägnierlage und der Ionentauscherlage angeordnet sein.

In Ausführungen kann eine mittlere Korngröße der lonentauscherpartikel 300 bis 1200 µm betragen. Die Wahl der Korngröße im angegebenen Bereich gewährleistet einen für den Stofftransport und die Reaktionskinetik notwendigen möglichst kleinen Korndurchmesser bei gleichzeitig möglichst niedrigem Druckverlust. Die mittlere Korngröße kann insbesondere nach ASTM D 2862 ermittelt werden.

In Ausführungen kann eine mittlere Korngröße der imprägnierten Aktivkohlepartikel 350 bis 550 µm betragen. Die Wahl der Korngröße im angegebenen Bereich gewährleistet einen für den Stofftransport und die Reaktionskinetik notwendigen möglichst kleinen Korndurchmesser bei gleichzeitig möglichst niedrigem Druckverlust. Die mittlere Korngröße kann insbesondere nach ASTM D 2862 ermittelt werden.

Zur Bestimmung der mittleren Korngröße anhand ASTM D 2862 wird eine repräsentative Probe der Schüttung in einen Siebturm mit Sieben in absteigender Größe der Siebmaschenweite gegeben. Die mittlere Korngröße beschreibt den sich aus einer experimentell anhand des oben genannten Aufbaus ermittelten Kurve der Korngrößenverteilung ergebenden theoretischen Korndurchmesser, für welchen 50 % der Körner über diesem Durchmesser liegen und 50 % darunter.

In Ausführungen können die lonentauscherpartikel stark saure Kationentauscher umfassen, welche insbesondere als funktionelle Gruppe eine säureförmige Gruppe, insbesondere Sulfonsäure, und eine Kationengruppe der H+ oder Na+ Form aufweisen. Der stark saure Kationentauscher kann vom Gel-Typ oder vom Makroporösen-Typ sein. Als Basispolymer kommt beispielsweise ein Polystyrol-Divinylbenzol-Copolymer in Frage.

Darüber hinaus können die imprägnierten Aktivkohlepartikel der Imprägnierlage und/ oder die nicht-imprägnierten Aktivkohlepartikel der Aktivlage und/oder die Ionentauscherpartikel der Ionentauscherlage durch Zusatz von Klebstoff gebunden, insbesondere vernetzt, sein. Der Klebstoff immobilisiert die Partikel in der jeweiligen Lage und verhindert, dass diese, insbesondere unter Vibrationsbelastung, herausrieseln.

Diese Bindung, insbesondere Vernetzung, wird vorteilhaft durch den Zusatz von Klebstoff erreicht, dessen Kleberfäden an der Oberfläche der Aktivkohle- bzw. Ionentauscherpartikel anhaften und verschiedene Aktivkohle- bzw. lonentauscherpartikel miteinander verbinden, ohne jedoch die Adsorptionsleistung der Aktivkohle- bzw. Ionentauscherpartikel zu beeinträchtigen. Geeignete Klebstoffe umfassen beispielsweise reaktive Schmelzflussklebestoffe, z.B. auf Basis von Polyurethan oder Silan. Möglich ist auch ein thermoplastischer Klebstoff, der z.B. auf Basis von Polyolefinen hergestellt wird. In Ausführungen kann der Klebstoff ein reaktiver Schmelzflussklebstoff sein.

Gemäß einer weiteren Ausführungsform kann das Luftfiltermedium mindestens eine Trägerlage umfassen, die insbesondere anströmseitig angeordnet ist, wobei insbesondere die Trägerlage ein synthetisches Vliesmaterial umfasst oder daraus besteht.

Die Trägerlage kann hierbei Träger der Partikel zumindest einer der Lagen sein. Insbesondere kann die Trägerlage Träger der lonentauscherpartikel der Ionentauscherlage sein. In anderen Ausführungen kann die Trägerlage allerdings auch Träger der imprägnierten Aktivkohlepartikel der Imprägnierlage oder Träger der nicht-imprägnierten Aktivkohlepartikel der Aktivlage sein. Die Trägerlage ist beispielsweise als eine Trägerlage bzw. -schicht ausgeführt, die ggf. eine mechanische (Vor-)Filtration von partikulären Verunreinigungen des zu reinigenden Gasstroms übernimmt. Das Vliesmaterial kann beispielsweise Fasern auf Basis von Polyester, Polypropylen, Polyamid, Polyacrylnitril und/oder Polycarbonat umfassen.

In einer Ausführungsform bildet die Ionentauscherlage eine unmittelbar an die Trägerlage angrenzende Lage, die vorzugsweise über einen Klebstoff mit der Trägerlage verbunden ist. Hierbei kommt sowohl ein Aufkleben der Ionentauscherlage auf die Trägerlage in Betracht als auch die Verklebung über noch nicht abgebundene Klebstofffäden, welche auf die lonentauscherpartikel aufgebracht werden. Die Trägerlage begrenzt somit die Ionentauscherlage zumindest an einer Seite und ist zugleich mit der Ionentauscherlage verbunden.

Gemäß einer weiteren zweckmäßigen Ausführungsform kann zumindest eine der Lagen Ionentauscherlage, Imprägnierlage und/oder Aktivlage an ihren Längs- und/oder Breitseiten versiegelt sein, so dass an den Seitenflächen eine Begrenzung der Lagen realisiert werden kann. Die Versiegelung an den Längs- und/oder Breitseiten verhindert, dass Partikel aus den Lagen herausrieseln, erhöht die Stabilität und verhindert eine unerwünschte Delamination.

In einer Weiterbildung kann das Luftfiltermedium mindestens eine Partikelfilterlage umfassen, die insbesondere abströmseitig angeordnet ist. Die Partikelfilterlage kann ein synthetisches Vliesmaterial umfassen oder daraus bestehen. Insbesondere kann eine Abscheideeffizienz der Partikelfilterlage höher sein als ein Abscheideeffizienz der Trägerlage.

In Ausführungsformen erfüllt die Partikelfilterlage die Filtrationsklasse H13 oder H14 nach DIN EN 1822-1. In anderen Worten kann es sich bei der Partikelfilterlage um ein HEPA-Filtermedium handeln. Denkbar ist in der Partikelfilterlage der Einsatz eines Vliesmaterials aus Kunststoff oder Glasfaser. In Ausführungsformen kann die Partikelfilterlage ferner ein HEPA-Aerosolmedium auf Membranbasis, etwa aus ePTFE, umfassen.

Alternativ oder zusätzlich kann zwischen zumindest einer der Lagen aus der Gruppe umfassend Ionentauscherlage, Aktivlage und Imprägnierlage und einer benachbarten Lage, eine Trennlage angeordnet sein, die insbesondere ein synthetisches Vliesmaterial umfasst oder daraus besteht. Die Trennlage kann hierbei eine mit der Trägerlage vergleichbare Struktur haben und insbesondere eine niedrigere Abscheideeffizienz haben wie die Partikelfilterlage. Es kann insbesondere vorgesehen sein, dass die imprägnierten Aktivkohlepartikel der Imprägnierlage und/oder die nicht-imprägnierten Aktivkohlepartikel der Aktivlage mittels eines Klebstoffs bezüglich einer Trennlage immobilisiert sind.

Schließlich kann das Luftfiltermedium gemäß einer weiteren Ausführungsform zumindest eine weitere Adsorptionslage umfassen, die Adsorbenspartikel umfasst, wobei die Adsorbenspartikel insbesondere eine Aktivkohle, ein Zeolith, einen Ionentauscher und/ oder ein Molekularsieb umfassen. Hierdurch ist eine zusätzliche vorteilhafte Anpassung an ein gegebenes Zielgasspektrum möglich, so dass das erfindungsgemäße Luftfiltermedium noch besser an die spezifischen Vorgaben eines bestimmten Gas- und Geruchsstoffprofils angepasst werden kann.

Ein weiterer Aspekt der vorliegenden Erfindung betrifft einen Filtermediumkörper umfassend ein erfindungsgemäßes Luftfiltermedium, das insbesondere mehrfach zu einem Faltenbalg gefaltet ist oder in einer mehrfach gewellten Form vorliegt, um einen so genannten Kompaktfilter zu bilden. Alternativ kann das erfindungsgemäße Luftfiltermedium in dem Filtermediumkörper auch in gestapelter Form vorliegen.

Ein noch weiterer Aspekt der vorliegenden Erfindung betrifft ein Filterelement umfassend einen erfindungsgemäßen Filtermediumkörper sowie ein den Filtermediumkörper zumindest teilweise umlaufendes Rahmenelement, das mit dem Filtermediumkörper verbunden ist. Das Rahmenelement kann auf Stirnkanten des Faltenbalgs aufgeklebte Seitenbänder aus einem Schaum- oder Vliesmaterial und/oder an Endfaltenabschnitten des Faltenbalgs befestigte Kopfbänder aus einem Schaum- oder Vliesmaterial umfassen. Alternativ kann das Rahmenelement einen Kunststoffrahmen umfassen, in den der Filtermediumkörper eingeklebt oder von einem Material des Rahmenelements umspritzt ist. Das Rahmenelement umläuft den Filtermediumkörper insbesondere vollständig. An dem Rahmenelement kann in Ausführungen ein umlaufendes Dichtungselement angeordnet sein, das zur Abdichtung des Filterelements in einer Filtervorrichtung, insbesondere in einem Innenraumluftfilter, in einem Ansaugluftfilter einer Brennstoffzelle oder in einem Wrasenfilter, ausgebildet ist.

Schließlich betrifft ein weiterer Aspekt der vorliegenden Erfindung die Verwendung eines erfindungsgemäßen Luftfiltermediums in einem Innenraumluftfilter, einem Ansaugluftfilter einer Brennstoffzelle oder in einem Wrasenfilter.

### Kurze Beschreibung der Zeichnungen

Es zeigen, jeweils schematisch:
- Fig. 1: eine stark vereinfachte Schnittansicht eines erfindungsgemäßen Luftfiltermediums gemäß eines nicht erfindungsgemäßen Ausführungsbeispiels;
- Fig. 2a-c: jeweils eine stark vereinfachte Schnittansicht eines erfindungsgemäßen Luftfiltermediums gemäß einer zweiten Ausführungsform;
- Fig. 3: eine stark vereinfachte Schnittansicht eines erfindungsgemäßen Luftfiltermediums gemäß einer dritten Ausführungsform;
- Fig. 4: eine stark vereinfachte Schnittansicht eines erfindungsgemäßen Luftfiltermediums gemäß einer vierten Ausführungsform;
- Fig. 5: eine isometrische Ansicht einer Ausführungsform eines erfindungsgemäßen Filtermediumkörpers;
- Fig. 6: eine isometrische Ansicht einer Ausführungsform eines erfindungsgemäßen Filterelements;
- Fig. 7: NH₃-Durchbruchskurven eines erfindungsgemäßen Luftfiltermediums im Vergleich zu einem Luftfiltermedium des Standes der Technik.

### Ausführungsform(en) der Erfindung

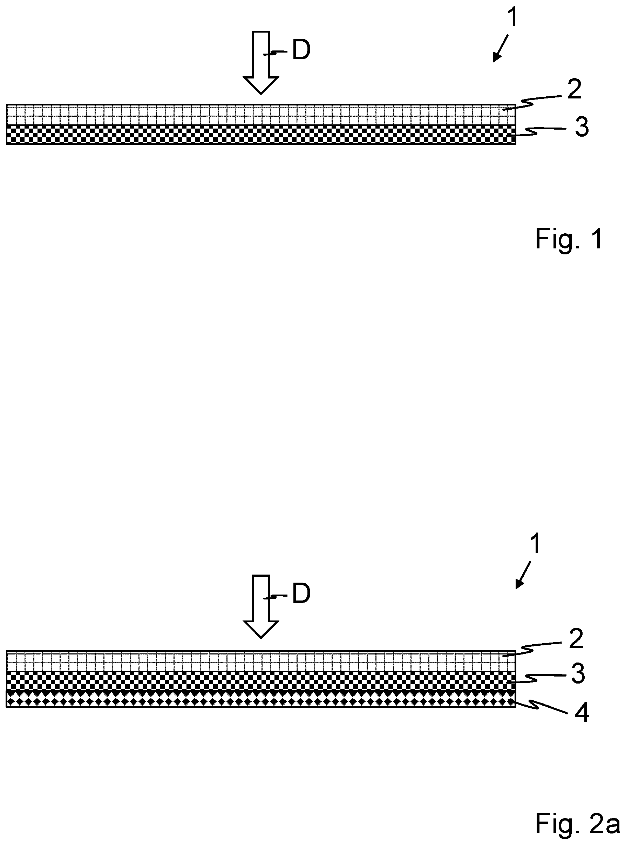

In **Fig. 1** ist ein Luftfiltermedium 1 gemäß eines nicht erfindungsgemäßen Ausführungsbeispiels dargestellt. Das Luftfiltermedium 1 umfasst eine Ionentauscherlage 2, die Ionentauscherpartikel umfasst, und eine Imprägnierlage 3, die imprägnierte Aktivkohlepartikel umfasst. Die imprägnierten Aktivkohlepartikel der Imprägnierlage 3 sind mit einem sauren Imprägniermittel umfassend zumindest eine anorganische Säure imprägniert, wobei die anorganische Säure aus der Gruppe umfassend Phosphorsäure, Schwefelsäure und Salzsäure ausgewählt ist. Eine Grammatur der lonentauscherpartikel in der Ionentauscherlage 2 liegt in einem Bereich zwischen 150 g/m² und 350 g/m² und eine Grammatur der imprägnierten Aktivkohlepartikel in der Imprägnierlage 3 in einem Bereich zwischen 150 g/m² und 350 g/m². Das Luftfiltermedium 1 weist eine vorbestimmte Anströmseite und eine vorbestimmte Abströmseite auf, wobei das Luftfiltermedium 1 im Betrieb von der Anströmseite zur Abströmseite in einer Durchströmungsrichtung D durchströmbar ist und die Imprägnierlage 3 stromabwärts der Ionentauscherlage 2 angeordnet ist.

Ein erfindungsgemäßes Luftfiltermedium 1 erreicht überraschenderweise trotz einer geringeren Grammatur in der Ionentauscherlage 2 als Luftfiltermedien des Standes der Technik eine Anfangsabscheideeffizienz von >95 % für NH₃ und TMA, da es die Ionentauscherlage 2 mit der Imprägnierlage 3 umfassend sauer imprägnierte Aktivkohlepartikel kombiniert. Die imprägnierte Aktivkohle der Imprägnierlage 3 weist eine, verglichen mit der Ionentauscherlage 2, bessere Spontanität auf und trägt daher zu der hohen Anfangsabscheideeffizienz bei und verbessert so das "Startverhalten" und verhindert anfängliche Gasdurchbrüche. Die Ionentauscherlage 2 hingegen weist eine deutlich höhere Adsorptionskapazität auf und trägt damit zur Aufrechterhaltung der Gasadsorption über längere Zeiträume bei.

Die imprägnierten Aktivkohlepartikel der Imprägnierlage 3 können beispielsweise mit 5 Massen-% oder weniger des sauren Imprägniermittels imprägniert sein. Dieser geringe Imprägnieranteil ermöglicht weiterhin die Koadsorption von Kohlenwasserstoffen, insbesondere von Methylethylketon (MEK), während die Ionentauscherlage 2 sehr gasspezifisch ist und nur basische Gase abscheidet.

In **Fig. 2a** bis **Fig. 2c** ist ein Luftfiltermedium 1 gemäß einer zweiten Ausführungsform dargestellt, das sich von der ersten Ausführungsform dadurch unterscheidet, dass es eine Aktivlage 4 aufweist, die nicht-imprägnierte Aktivkohlepartikel umfasst. Gemäß Fig. 2a ist die Aktivlage 4 stromabwärts der Imprägnierlage 3 angeordnet, wobei die Imprägnierlage 3 zwischen Ionentauscherlage 2 und Aktivlage 4 angeordnet ist. Dies hat den Vorteil, dass die Imprägnierlage 3 als Vorfilter zur Kohlenwasserstoffadsorption genutzt werden kann. Durch den in Ausführungen verhältnismäßig geringen Imprägnierungsgrad von ca. 5 m.% hat die Imprägnierlage noch ca. 80 % der Adsorptionskapazität für Kohlenwasserstoffe wie z.B. MEK, im Vergleich zur Aktivlage 4 ohne Imprägnierung. Somit kann die Imprägnierlage 3 stromaufwärts der Aktivlage 4 bereits einen Teil der Kohlenwasserstoffe aufnehmen und die Standzeit der Aktivlage 4 verlängern.

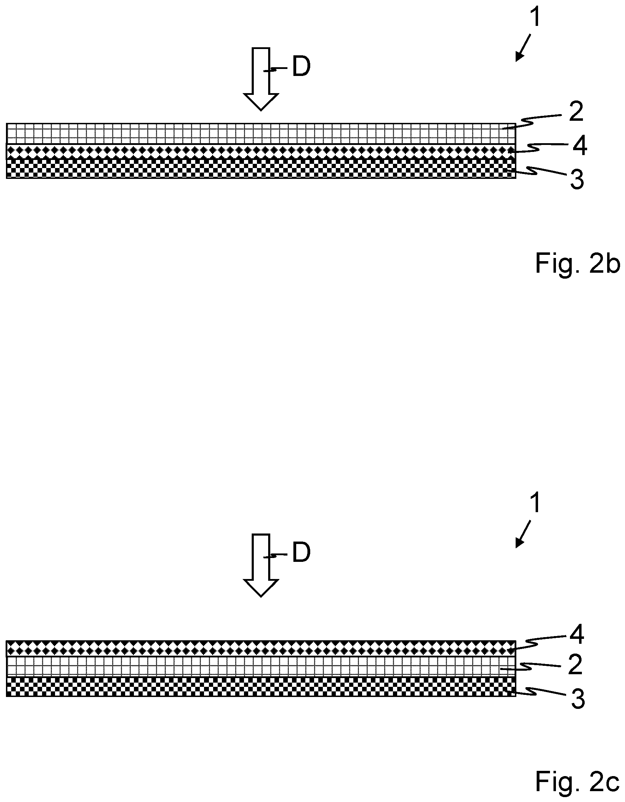

Gemäß Fig. 2b hingegen ist die Aktivlage 4 stromaufwärts der Imprägnierlage 3 angeordnet, wobei die Aktivlage 4 zwischen Ionentauscherlage 2 und Imprägnierlage 3 angeordnet ist. Gemäß Fig. 2c schließlich ist die Aktivlage 4 stromaufwärts der Imprägnierlage 3 angeordnet, wobei die Ionentauscherlage 2 zwischen Aktivlage 4 und Imprägnierlage 3 angeordnet ist.

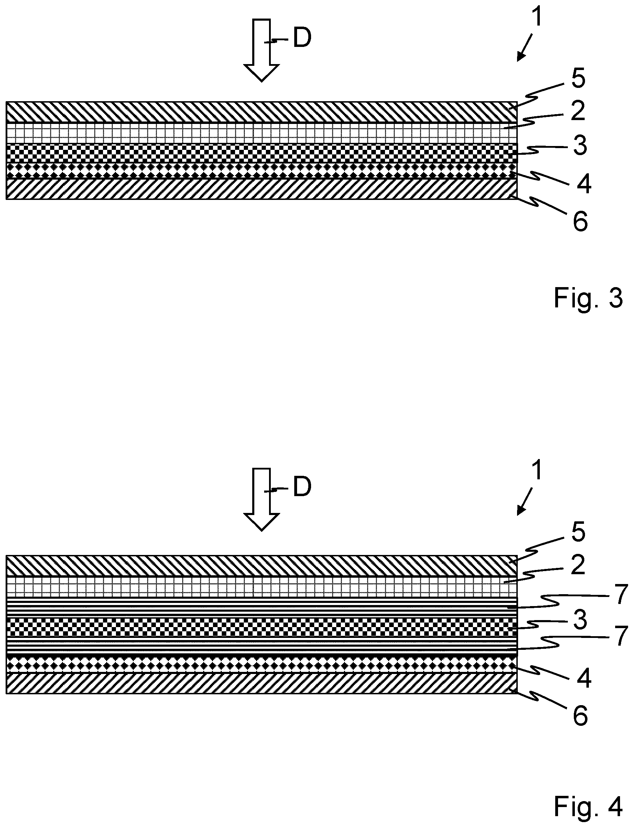

**Fig. 3** zeigt ein erfindungsgemäßes Luftfiltermedium 1 gemäß einer dritten Ausführungsform, welches eine Weiterbildung der in Fig. 2a gezeigten zweiten Ausführungsform darstellt. Das Luftfiltermedium 1 weist anströmseitig eine Trägerlage 5 auf, bezüglich der die lonentauscherpartikel der Ionentauscherlage 2 immobilisiert sind.

Die Trägerlage 5 weist ein insbesondere synthetisches Vliesmaterial auf oder besteht daraus und erlaubt daher sowohl eine mechanische Stütz- bzw. Haltefunktion für die lonentauscherpartikel als auch eine (Vor-)Filtration von partikulären Verunreinigungen des zu reinigenden Luftstroms. Das Vliesmaterial kann beispielsweise Fasern auf Basis von Polyester, Polypropylen, Polyamid, Polyacrylnitril und/oder Polycarbonat umfassen.

Die Ionentauscherlage 2 grenzt unmittelbar an die Trägerlage 5 an, wobei die Ionentauscherpartikel der Ionentauscherlage 2 beispielsweise über einen Klebstoff mit der Trägerlage 5 verbunden sind. Insbesondere können die lonentauscherpartikel über ein Netz von Klebstofffäden mit der Trägerlage 5 verbunden sein, wobei das Netz aus Klebstofffäden vorteilhafterweise so ausgebildet ist, dass es einen Durchströmquerschnitt des Luftfiltermediums 1 nicht unnötig verengt, um keinen übermäßigen Druckverlust zu erzeugen.

Ferner weist das Luftfiltermedium 1 eine Partikelfilterlage 6 auf, die abströmseitig angeordnet ist und ein insbesondere synthetisches Vliesmaterial umfasst oder daraus besteht. Eine Abscheideeffizienz der Partikelfilterlage 6 ist insbesondere höher als eine Abscheideeffizienz der Trägerlage 5. Mit anderen Worten ist die Partikelfilterlage 6 höher abscheidend wie die Trägerlage 5, so dass Fein- und/oder Feinstpartikel hauptsächlich von der Partikelfilterlage 6 abgeschieden werden. Die Partikelfilterlage 6 kann beispielsweise Filtrationsklasse H13 oder H14 nach DIN EN 1822-1 erfüllen.

Die in **Fig. 4** gezeigte vierte Ausführungsform des erfindungsgemäßen Luftfiltermediums 1 bildet die in Fig. 3 gezeigte dritte Ausführungsform dadurch weiter, dass zwischen der Ionentauscherlage 2 und der Imprägnierlage 3 sowie zwischen der Imprägnierlage 3 und der Aktivlage 4 jeweils eine Trennlage 7 angeordnet ist.

Die Trennlagen 7 können ein synthetisches Vliesmaterial umfassen oder daraus bestehen. Die Trennlagen 7 können insbesondere eine mit der Trägerlage vergleichbare Struktur haben und haben bevorzugt ebenfalls eine niedrigere Abscheideeffizienz als die Partikelfilterlage 6. Die imprägnierten Aktivkohlepartikel der Imprägnierlage 3 sind bezüglich einer der Trägerlagen 7 mittels eines Klebstoffs immobilisiert und die nicht-imprägnierten Aktivkohlepartikel der Aktivlage 4 sind bezüglich einer anderen Trägerlage 7 mittels eines Klebstoffs immobilisiert. Bei der Herstellung des Luftfiltermediums 1 ist es dadurch möglich, zunächst die Einzellagen (Trägerlage, Trennlagen) mit Adsorbenspartikeln (Ionentauscherpartikel, imprägnierte Aktivkohlepartikel, nicht-imprägnierte Aktivkohlepartikel) zu belegen und diese bezüglich der Trägerlage 5 bzw. Trennlagen 7 durch Klebstoff zu immobilisieren und diese Einzellagen anschließend zu einem Lagenverbund zusammenzusetzen, um das erfindungsgemäße Luftfiltermedium 1 zu erhalten. Ein Einsatz von Trennlagen 7 zwischen benachbarten Adsorbenslagen (Ionentauscherlage, Imprägnierlage, Aktivlage) verbessert die Fixierung der Adsorbentien im Lagenverbund des erfindungsgemäßen Luftfiltermediums 1 und wirkt einem Verlust von Adsorbenspartikeln durch "Herausrieseln" entgegen.

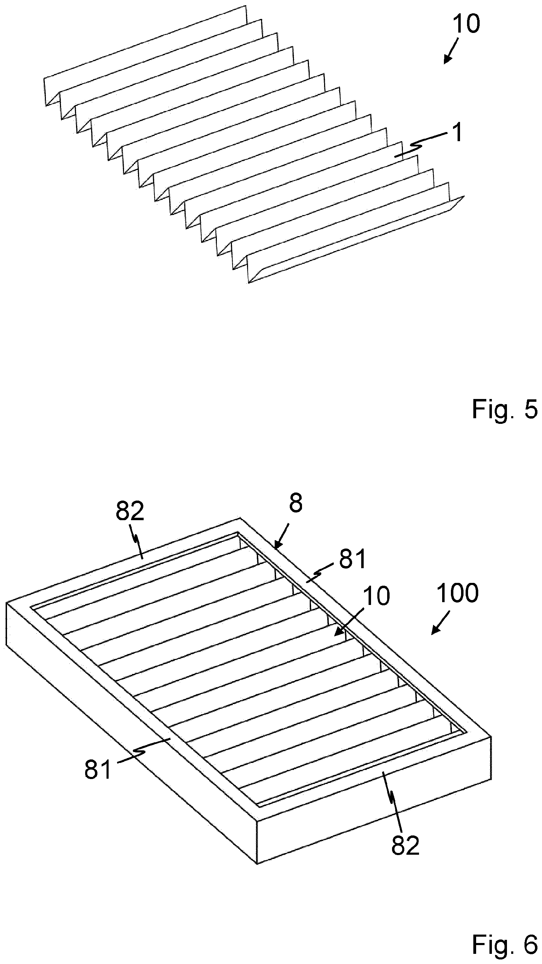

**Fig. 5** zeigt einen erfindungsgemäßen Filtermediumkörper 10, der ein erfindungsgemäßes Luftfiltermedium 1 aufweist, das mehrfach zu einem Faltenbalg gefaltet ist. Die Faltenhöhen und Faltenabstände sowie die Abmessungen des Filtermediumkörpers 10 in der Ebene (Breite, Länge) können in Abhängigkeit der technischen Randbedingungen eines konkreten Einsatzfalls durch fachmännisches Handeln festgelegt werden.

In **Fig. 6** ist ein erfindungsgemäßes Filterelement 100 gezeigt, das einen erfindungsgemäßen Filtermediumkörper 10 sowie ein den Filtermediumkörper 10 vollständig umlaufendes Rahmenelement 8 aufweist. Das Rahmenelement 8 ist mit dem Filtermediumkörper 10 verbunden, insbesondere mit den Stirnkanten sowie Endfaltenabschnitten des Faltenbalgs 10 verbunden. Das Rahmenelement 8 umfasst auf Stirnkanten des Faltenbalgs 10 angebrachte Seitenbänder 81 sowie auf Endfaltenabschnitte des Faltenbalgs 10 angebrachte Kopfbänder 82. Die Kopfbänder 82 und/oder Seitenbänder 81 können insbesondere ein Schaum- oder Vliesmaterial umfassen oder daraus bestehen. Die Kopfbänder 82 und/oder Seitenbänder 81 können insbesondere mit dem Faltenbalg 10 verklebt sein, etwa durch einen aushärtbaren Schmelzklebstoff z.B. auf Basis von Polyurethan oder Silan. Möglich ist auch ein thermoplastischer Klebstoff, der z.B. auf Basis von Polyolefinen hergestellt wird. In Ausführungen kann der Klebstoff ein reaktiver Schmelzflussklebstoff sein.

Alternativ können die Kopfbänder 82 und/oder Seitenbänder 81 auch aus einem (Hart-) Kunststoffmaterial bestehen. Ferner ist es möglich, dass alle Kopfbänder 82 und Seitenbänder 81 des Rahmenelements 8 einteilig ausgebildet sind, wobei das Rahmenelement 8 insbesondere einen (Hart-)Kunststoffrahmen umfassen kann, in den der Faltenbalgs 10 eingeklebt oder von einem Material des Rahmenelements 8 umspritzt ist.

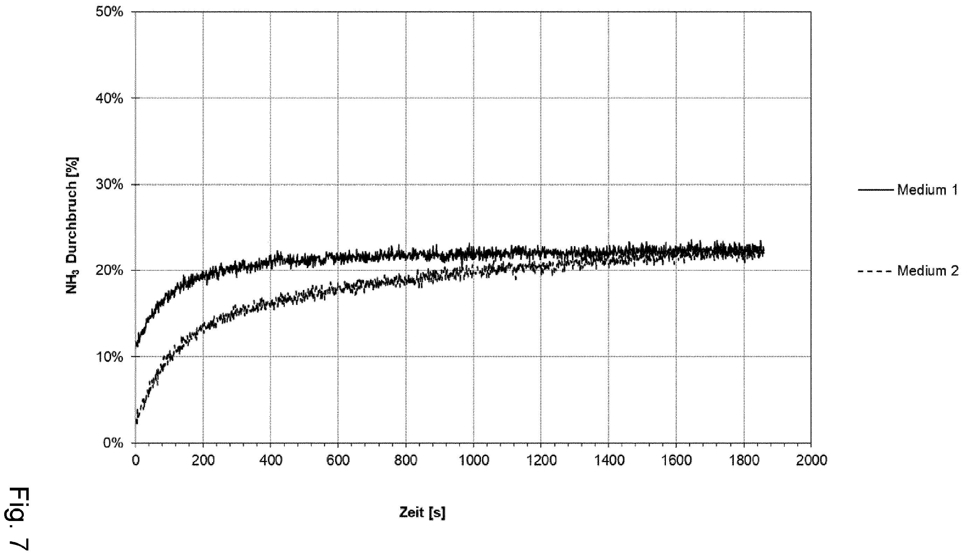

In **Fig. 7** sind zwei NH₃ Durchbruchskurven dargestellt, die experimentell ermittelt wurden. Die obere in durchgezogener Linie dargestellte Kurve ("Medium 1") ist ein Luftfiltermedium nach dem Stand der Technik und die untere gestrichelt dargestellte Kurve ("Medium 2") ein erfindungsgemäßes Luftfiltermedium.

Der Aufbau der verglichenen Luftfiltermedien war hierbei wie in untenstehender Tabelle beschrieben.

| | **Medium 1** | **Medium 2** | **Einheit** |
|---|---|---|---|
| Stark saurer Kationentauscher | 300 | 250 | g/m² |
| 5 m.-% H₃PO₄ imprägnierte Aktivkohle | - | 280 | g/m² |
| Nicht imprägnierte Aktivkohle (wasserdampfaktiviert) | 500 | 280 | g/m² |
| Gesamtqrammatur | 800 | 810 | g/m² |

Bei dem stark sauren Kationentauscher handelt es sich spezifisch um einen getrockneten makroporösen Kationentauscher auf Basis eines Polystyrol-Divinylbenzol-Copolymers, der Sulfonsäure als funktionale Gruppe aufweist.

Bei der imprägnierten Aktivkohle handelt es sich spezifisch um eine mit 5 Massen-% Phosphorsäure imprägnierte körnige Aktivkohle mit einem Wassergehalt von etwa 5 % und einer mittleren Korngröße von etwa 0,5 mm.

Bei der nicht-imprägnierten Aktivkohle handelt es sich spezifisch um wasserdampfaktivierte körnige Aktivkohle auf Basis von Kokosnussschalen mit einem Wassergehalt < 3 %.

Aus den Luftfiltermedien ("Medium 1" und "Medium 2") wurden für die Vergleichsmessungen gefaltete Filtermediumkörper mit einer Filterfläche von 0,48 m² gebildet. Die Vergleichsmessungen wurden bei einer Temperatur von 23°C bei 50 % relative Feuchte unter Einhaltung der ISO 11155-2 durchgeführt.

Während der Messung wurde ein mit 10 ppm NH₃ versetzter Luftvolumenstrom mit 400 Nm³/h (Anströmgeschwindigkeit am Filtermedium 0,23 m/s) durch den das Luftfiltermedium aufweisenden Filtermediumkörper geleitet und dem Filtermediumkörper nachgelagert vermittels eines FTIR (Fourier-Transformations-Infrarotspektrometer) die NH₃ Konzentration gemessen, aus der sich der im Diagramm auf der y-Achse aufgetragene Durchbruchsgrad berechnen lässt.

Aus der Messkurve des Luftfiltermediums nach dem Stand der Technik ("Medium 1") ist zu erkennen, dass die Anfangsabscheideeffizient (t=0s) mit einem Durchbruch von ca. 11% vergleichsweise gering ist und damit gängige Spezifikationen nicht erfüllt werden können.

Das erfindungsgemäße Luftfiltermedium ("Medium 2") hingegen weist eine deutlich verbesserte Anfangsabscheideeffizient (t=0s) mit einem Durchbruch von ca. 2,5 % auf, wobei sich die Kurve über die Zeit dem Verlauf der für das Medium 1 ermittelten Kurve annähert. Diese insbesondere hinsichtlich der Anfangsabscheideeffizienz verbesserte Adsorptionskinetik für NH₃ wird bei dem erfindungsgemäßen Luftfiltermedium durch den Einsatz von mit 5 Massen-% H₃PO₄ imprägnierter Aktivkohle in der Imprägnierlage erreicht, da diese - anders als die Ionentauscherlage - zu einem optimierten Startverhalten beiträgt. Die Ionentauscherlage hingegen weist eine deutlich höhere Adsorptionskapazität für NH₃ und andere basische Gase auf und trägt damit zur Aufrechterhaltung der Gasadsorption über längere Zeiträume bei.

Nach alledem weist das erfindungsgemäße Luftfiltermedium eine überraschend verbesserte Anfangsabscheideeffizienz für NH₃ auf, während die Gesamtabscheideeffizienz über längere Zeiträume ebenfalls verbessert ist oder zumindest auf dem gleichen Niveau liegt, wie bei einem Luftfiltermedium des Standes der Technik, das keine imprägnierte Aktivkohle umfasst.

## Patentansprüche

1. Luftfiltermedium (1), insbesondere für einen Innenraumluftfilter, einen Ansaugluftfilter einer Brennstoffzelle oder einen Wrasenfilter, wobei das Luftfiltermedium (1) eine vorbestimmte Anströmseite und eine vorbestimmte Abströmseite aufweist, und wobei das Luftfiltermedium (1) von der Anströmseite zur Abströmseite in einer Durchströmungsrichtung (D) durchströmbar ist,
umfassend:
- eine Ionentauscherlage (2), die lonentauscherpartikel umfasst, und
- eine Imprägnierlage (3), die imprägnierte Aktivkohlepartikel umfasst,
**dadurch gekennzeichnet, dass**
- die Imprägnierlage (3) stromabwärts der Ionentauscherlage (2) angeordnet ist,
- die imprägnierten Aktivkohlepartikel der Imprägnierlage (3) mit einem sauren Imprägniermittel umfassend zumindest eine anorganische Säure imprägniert sind, wobei die anorganische Säure aus der Gruppe umfassend Phosphorsäure, Schwefelsäure und Salzsäure ausgewählt ist,
- und dass eine Grammatur der lonentauscherpartikel in der Ionentauscherlage (2) in einem Bereich zwischen 150 g/m² und 350 g/m² liegt,
- und dass eine Grammatur der imprägnierten Aktivkohlepartikel in der Imprägnierlage (3) in einem Bereich zwischen 150 g/m² und 350 g/m² liegt,
- wobei das Luftfiltermedium (1) ferner eine Aktivlage (4) aufweist, die nicht-imprägnierte Aktivkohlepartikel umfasst.

2. Luftfiltermedium (1) nach Anspruch 1, wobei eine Grammatur der lonentauscherpartikel in der Ionentauscherlage (2) in einem Bereich zwischen 200 g/m² und 350 g/m² liegt und/oder eine Grammatur der imprägnierten Aktivkohlepartikel in der Imprägnierlage (3) in einem Bereich zwischen 250 g/m² und 350 g/m² liegt.

3. Luftfiltermedium (1) nach einem der vorigen Ansprüche, wobei die Aktivlage (4) stromabwärts der Imprägnierlage (3) angeordnet ist.

4. Luftfiltermedium (1) nach einem der vorigen Ansprüche, wobei eine mittlere Korngröße der lonentauscherpartikel 300 bis 1200 µm beträgt.

5. Luftfiltermedium (1) nach einem der vorigen Ansprüche, wobei eine mittlere Korngröße der imprägnierten Aktivkohlepartikel 350 bis 550 µm beträgt.

6. Luftfiltermedium (10) nach einem der vorigen Ansprüche, wobei die lonentauscherpartikel stark saure Kationentauscher umfassen, welche insbesondere als funktionelle Gruppe eine säureförmige Gruppe, insbesondere Sulfonsäure, und eine Kationengruppe der H+ oder Na+ Form aufweisen.

7. Luftfiltermedium (1) nach einem der vorigen Ansprüche, wobei die imprägnierten Aktivkohlepartikel der Imprägnierlage (3) und/oder die nicht-imprägnierten Aktivkohlepartikel der Aktivlage (4) und/oder die lonentauscherpartikel der Ionentauscherlage (2) durch Zusatz von Klebstoff gebunden, insbesondere vernetzt, sind.

8. Luftfiltermedium (1) nach einem der vorigen Ansprüche, umfassend mindestens eine Trägerlage (5), die insbesondere anströmseitig angeordnet ist, wobei insbesondere die Trägerlage (5) ein synthetisches Vliesmaterial umfasst oder daraus besteht.

9. Luftfiltermedium (1) nach einem der vorigen Ansprüche, umfassend mindestens eine Partikelfilterlage (6), die insbesondere abströmseitig angeordnet ist, wobei insbesondere die Partikelfilterlage (6) ein synthetisches Vliesmaterial umfasst oder daraus besteht.

10. Luftfiltermedium (1) nach einem der vorigen Ansprüche, wobei zwischen zumindest einer der Lagen aus der Gruppe umfassend Ionentauscherlage (2), Aktivlage (4), und/oder Imprägnierlage (3) und einer benachbarten Lage, eine Trennlage (7) angeordnet ist, die insbesondere ein synthetisches Vliesmaterial umfasst oder daraus besteht.

11. Luftfiltermedium (1) nach einem der vorigen Ansprüche, umfassend zumindest eine weitere Adsorptionslage, die Adsorbenspartikel umfasst, wobei die Adsorbenspartikel insbesondere eine Aktivkohle, ein Zeolith, einen Ionentauscher und/oder ein Molekularsieb umfassen.

12. Filtermediumkörper (10), umfassend ein Luftfiltermedium (1) gemäß einem der Ansprüche 1 bis 10, wobei das Luftfiltermedium (1) insbesondere mehrfach zu einem Faltenbalg gefaltet ist.

13. Filterelement (100), umfassend einen Filtermediumkörper (10) nach Anspruch 11 und ein den Filtermediumkörper (10) zumindest teilweise umlaufendes Rahmenelement (8), das mit dem Filtermediumkörper (10) verbunden ist.

14. Verwendung eines Luftfiltermediums (1) nach einem der Ansprüche 1 bis 10 in einem Innenraumluftfilter, einem Ansaugluftfilter einer Brennstoffzelle oder in einem Wrasenfi lter.
